# EUROPÄISCHE PATENTSCHRIFT

(11) **EP 2 739 503 B1**
(45) Veröffentlichungstag und Bekanntmachung des Hinweises auf die Patenterteilung: **18.07.2018**
(21) Anmeldenummer: 12741007.4
(22) Anmeldetag: 01.08.2012
(51) Int. Cl.: B60N 2/06

(54) **SCHIENENFÜHRUNG EINER LÄNGSVERSTELLUNG EINES KRAFTFAHRZEUGSITZES**
GUIDE RAIL OF A LONGITUDINAL ADJUSTMENT OF A MOTOR VEHICLE SEAT
GLISSIÈRE D'UN SYSTÈME DE RÉGLAGE LONGITUDINAL D'UN SIÈGE DE VÉHICULE AUTOMOBILE

(30) Priorität: 01.08.2011 DE 102011080219
(43) Veröffentlichungstag der Anmeldung: 11.06.2014
(73) Patentinhaber: Adient Luxembourg Holding S.à r.l., 1855 Luxembourg (LU)
(72) Erfinder: BECKER, Burkhard, 42657 Solingen (DE)
(74) Vertreter: Bauer, Wulf
(86) Internationale Anmeldenummer: PCT/EP2012/065062
(87) Internationale Veröffentlichungsnummer: WO 2013/017632

(56) Entgegenhaltungen:
- EP-A1- 0 123 601
- EP-A1- 1 645 458
- WO-A1-99/51456
- GB-A- 2 071 486
- JP-U- H0 187 042
- US-A- 5 012 613

## Beschreibung

Die Erfindung bezieht sich auf eine Schienenführung einer Längsverstellung eines Kraftfahrzeugsitzes, mit einem Stellantrieb, der einen Drehantrieb, der insbesondere als Elektromotor ausgebildet ist, der eine Ausgangswelle, und der ein Getriebe hat, das eine Spindelmutter, die mit der Ausgangswelle drehverbunden ist und eine Spindel aufweist, wobei die Spindel ein Spindelgewinde aufweist, mit dem die Spindelmutter in Eingriff ist. Sie bezieht sich weiterhin auf einen mit einer derartigen Längsverstellung ausgestatteten Fahrzeugsitz und auf ein damit ausgerüstetes Fahrzeug.

Aus der US 5 012 613 A ist ein Stellantrieb für die Auf- und Abbewegung einer Fahrzeugscheibe bekannt, der einen Elektromotor als Drehantrieb, der eine Ausgangswelle und der ein Getriebe hat, das eine Spindelmutter, die mit der Ausgangswelle des Drehantriebs drehverbunden ist, und das eine Spindel aufweist, wobei die Spindel ein Spindelgewinde aufweist, mit dem die Spindelmutter in Eingriff ist, wobei die Spindel in einem kreisförmigen Krümmungsradius gekrümmt ist.

Aus der GB 2 071 486 A, EP 0 123 601 A1 (siehe Figuren 9, 10) und der JP H01 87042 U sind Schienenführungen einer Längsverstellung eines Kraftfahrzeugsitzes mit mindestens einem Schienenpaar bekannt, welches eine Bodenschiene, eine Sitzschiene und zwischen diesen beiden Schienen angeordnete Führungsmittel aufweist, wobei die Schienen des Schienenpaars in einer Längsrichtung, die im Wesentlichen parallel zu einer x-Achse ist, gegeneinander entlang eines Verschiebewegs verschiebbar sind, die Sitzschiene Mittel zur Befestigung eines oberhalb des Schienenpaars anzuordnenden Sitzgestells aufweist, die Bodenschiene und die Sitzschiene um den jeweils gleichen, kreisförmigen Krümmungsradius gekrümmt sind, der Krümmungsmittelpunkt sich auf der dem Sitzgestell abgewandten Seite des Schienenpaars befindet.

Zum Stand der Technik wird noch auf EP 1 645 458 A1, WO 99/ 51456 A1, WO 03/068551 A1, US 5,924,668 A, US 5,860,319 A und US 6,260,922 B1 verwiesen. Aus DE 10 2006 048 786 A1, US 5,941,495 A und DE 42 38 486 A1, dort beispielsweise Figur 2, und aus DE 10 2006 047 525 A1 sind Schienenführungen bekannt. Bei diesen Stellantrieben verlaufen die Spindeln geradlinig. Dies hat große Vorzüge, die Spindeln lassen sich präzise fertigen und ggf. ausrichten, Befestigungen sind einfach und es ist über die gesamte Länge des Verstellweges eine gleichbleibend gute Verstellbarkeit erreichbar.

Bei geradlinig verlaufenden Spindeln besteht jedoch der Nachteil, dass bei einer Verstellung der Sitz im Raum lediglich linear bewegt wird, nicht aber weitere Bewegungen möglich sind. Nun stellt ein großer Passagier den Sitz tief nach unten und weit nach hinten ein. Ein kleiner Passagier stellt dagegen seinen Sitz weit nach vorn und hoch ein. Die Neigung der Rückenlehne bleibt bei einer Verstellung nach dem Stand der Technik beibehalten. Sie kann für sich durch ein separates Lehnengelenk eingestellt werden. Ein großer Passagier stellt in der Regel die Rückenlehne in eine Position, in der sie stärker gegenüber der Vertikalen geneigt als dies bei einem kleinen Passagier der Fall ist. Wenn man ein separates Lehnengelenk vorsieht, bedeutet dies einen gewissen Aufwand. Auch die Neigung der Sitzfläche wird von großen und kleinen Personen unterschiedlich gewählt. Um die Neigung der Sitzfläche einstellen zu können, gibt es Sitzneigungsverstellungen. Diese bieten eine gute Bequemlichkeit, bedeuten aber wiederum Aufwand. Zudem verfügen Sitze nach dem Stand der Technik häufig über eine Sitzhöhenverstellung. Auch diese bedeutet zusätzliches Gewicht und zusätzlichen Aufwand. Die gilt für jede zusätzliche Verstelleinrichtung.

Hier setzt nun die Erfindung ein. Sie hat es sich zur Aufgabe gemacht, die oben angegebene Schienenführung weiterzubilden und diese von sich aus für die Bandbreite der Passagiere eine möglichst gute Einstellung liefert, so dass zusätzliche Einstellvorrichtungen soweit wie möglich entfallen können. Dabei soll der Stellantrieb der Schienenführung nach wie vor einfach aufgebaut sein, er soll den Ansprüchen, die man an einen Stellantrieb nach dem Stand der Technik stellt, standhalten. Er soll sich für manuelle und motorische Verstellvorrichtungen eignen.

Diese Aufgabe wird gelöst durch eine Schienenführung nach dem Patentanspruch Dieser Stellantrieb ermöglicht eine Verstellung nicht mehr entlang einer Geraden, sondern auf einer Kreisbogenlinie. Aufgrund der speziellen Wahl der Krümmungsradien innerhalb der angegebenen Grenzen wird erreicht, dass ein weit hinten in der Schienenführung befindlicher Sitz etwas schräger nach hinten positioniert werden kann als ein im vorderen Bereich der Schienenführung eingestellter Sitz. Dies ermöglicht es, auf zusätzliche Einstellvorrichtungen, beispielsweise eine Sitzhöhenverstellung und/oder eine Neigungsverstellung der Rückenlehne, zu verzichten. Dies bedeutet eine erhebliche Einsparung an Aufwand und Gewicht. Auf diese Weise lässt sich ein Kraftfahrzeugsitz deutlich leichtgewichtiger ausbilden als nach dem Stand der Technik.

Die einer Kreisbogenlinie folgende Krümmung hat einen Krümmungsmittelpunkt, der sich im eingebauten Zustand des Kraftfahrzeugsitzes unterhalb des Sitzes befindet. Der Krümmungsmittelpunkt befindet sich auf der Seite der Spindel, die von dem Sitzbereich und der Lehne abgewandt ist.

Spindeln mit einem derartigen Krümmungsradius lassen sich präzise fertigen. Ausgehend von einer geraden Spindel wird in einer Form oder über eine andere, geeignete Vorrichtung die Krümmung durchgeführt. Trotz der nicht mehr linearen Verschiebung werden ein guter Gleichlauf, eine präzise Führung und eine hohe Fertigungsgenauigkeit erreicht.

Die Spindelmutter ist eine gerade Mutter, sie ist gegenüber dem Stand der Technik ungeändert. Unter einer geraden Mutter wird eine Spindelmutter verstanden, bei der das Innengewinde auf einem Zylindermantel liegt. Eine gerade Mutter kann verwendet werden, weil die Krümmung der Spindel selbst bei dem angegebenen geringsten Krümmungsradius von 1.500 mm über die Länge der Spindelmutter gesehen eine so geringe Abweichung von einer Geraden bewirkt, dass eine normale Spindelmutter eingesetzt werden kann. Es ist so, dass mit größerem Krümmungsradius die Abweichungen von einer Geraden geringer werden. Wenn eine Mutter mit maximal 15 mm axialer Länge, insbesondere maximal 12, vorzugsweise nur 10 mm axiale Länge eingesetzt wird, bleiben die Abweichungen selbst bei dem kleinsten Krümmungsradius der Spindel so, dass kein merklicher Einfluss auf das Zusammenwirken von Spindelmutter und Spindel festzustellen ist. Die Spindel ist ortsfest. Sie ist mit einer Schiene, insbesondere der Bodenschiene, verbunden.

Wenn von einem Krümmungsradius für die Spindel gesprochen wird, so versteht sich dies bezogen auf den Krümmungsradius der Mittellinie der Spindel. Vorzugsweise haben die Krümmung der Außenlinie der Spindel und der Innenlinie der Spindel den gleichen Krümmungsmittelpunkt. Dies gilt auch insbesondere für die Schienen, die im Zusammenhang mit der Spindel verwendet werden. Der Krümmungsradius der Schienen soll dort, wo sich die Spindel befindet, mit dem Krümmungsradius der Spindel übereinstimmen. Bereiche der Schienen, die weiter außen liegen, haben einen größeren Krümmungsradius, die Mittelpunkte dieser Bereiche liegen auf einer Mittelpunktlinie, die eine Parallele zur y-Achse ist.

Bei dem Verfahren zum Herstellen einer derartigen Schienenführung werden die Bodenschiene und die Sitzschiene jeweils aus einem geeigneten Zuschnitt hergestellt, dieser Zuschnitt verläuft entlang der Krümmungsradien, den die Spindel bzw. die fertige Schiene hat. Die Zuschnitte werden in jeweiligen Prägeformen geprägt, das Prägen findet in mindestens einem Prägeschritt statt. Auf diese Weise wird eine zum Stellantrieb passende Schiene erstellt.

Dieses Verfahren hat den Vorteil, dass die gewünschten Genauigkeiten erreicht werden. Es lassen sich auf diese Weise Schienen herstellen, die trotz des gekrümmten Verlaufs des Verschiebeweges leicht verstellbar sind, präzise ineinander geführt sind und gute Gleiteigenschaften aufweisen.

Üblicherweise hat eine Längsverstellung zwei Schienenführungen, die in der Regel weitgehend baugleich sind. Bei einem Kraftfahrzeugsitz mit zwei Schienenführungen sind beide Schienenführungen um denselben Krümmungsradius gebogen. Die Bodenschiene weist vorzugsweise Befestigungsbereiche auf, an diesen ist sie mit einer Bodengruppe des Kraftfahrzeugs verbindbar.

Die Erfindung bezieht sich auch auf einen Kraftfahrzeugsitz mit einer oben beschriebenen Schienenführung. Bei diesem weist das Sitzgestell Verbindungsteile auf, die Verbindungsteile sind mit den Mitteln zur Befestigung der Sitzschiene, vorzugsweise der beiden Sitzschienen jeder Seite, verbunden.

Bei dem Kraftfahrzeugsitz ist der Sitzbereich vorzugsweise starr mit den Schienen verbunden. Es sind keine Einstellvorrichtungen zwischen der Sitzschiene und dem Sitzbereich vorgesehen. Dadurch werden Bauteile einer normalerweise vorhandenen Sitzhöhenverstellung und/oder Sitzneigungsverstellung eingespart. Zu diesen Bauteilen gehört beispielsweise eine sitzanhebende Feder, die eine gewisse Federkraft haben muss, was ein gewisses Gewicht bedeutet. Es werden zudem Gelenkarme und Einstellvorrichtungen, beispielsweise Taumelgelenkbeschläge, eingespart.

Der Drehantrieb hat eine Ausgangswelle. Vorzugsweise ist der Drehantrieb ein Elektromotor. Der Drehantrieb kann auch für eine manuelle Verstellung ausgelegt sein. Der Drehantrieb ist dann von Hand zu betätigen. Er weist z.B. eine Kurbel auf, die sich in Griffweite eines Passagiers befindet und über die der Passagier die Drehbewegung in das Getriebe einleitet. Im Gegensatz zu einer Schienenführung nach dem Stand der Technik, die mit einer manuell zu betätigenden Arretiereinrichtung ausgestattet ist, wird keine Feder benötigt, die den Sitz innerhalb seiner Schienenführung nach vorn belastet. Diese Feder muss eine erhebliche Federkraft aufweisen, sie trägt zum Gesamtgewicht bei. Eine derartige Feder wird eingespart.

Vorzugsweise hat ein derartiger Kraftfahrzeugsitz keine zusätzliche Einstellvorrichtung, insbesondere keine Sitzhöhenverstellung und/oder keine Lehnenneigungsverstellung.

Schließlich bezieht sich die Erfindung auch auf ein Kraftfahrzeug, das mit einer Schienenführung bzw. einem Kraftfahrzeugsitz wie oben beschrieben ausgerüstet ist. In diesem Kraftfahrzeug ist die Schienenführung so angeordnet, dass in der hintersten Position der Längsverstellung die Lehne des Kraftfahrzeugsitzes in einem Winkel von 10 bis 20° gemessen von der Vertikalen nach hinten geneigt ist und in der vordersten Position in einem Winkel von 5 bis 15°, wiederum gemessen von der Vertikalen nach hinten geneigt ist, wobei die Winkeländerung zwischen diesen beiden Positionen mindestens 3°, vorzugsweise 6° beträgt. Dabei werden die gewünschten Verstellpositionen unmittelbar über die Schienenführung erreicht, ohne dass zusätzliche Einstellvorrichtungen vorhanden sind. Es führt zu einem deutlichen Kosten- und Gewichtsvorteil. Es liegen alle Krümmungsmittelpunkte auf der Mittelpunktlinie, die eine Parallele zur y-Achse ist. Die Radien verlaufen senkrecht zu dieser Mittelpunktlinie. Bei einer Längsführung mit zwei Schienenführungen liegen die Krümmungsmittelpunkte beider Schienenführungen auf derselben Mittellinie, allerdings an unterschiedlichen Orten auf dieser. Bei jeder einzelnen Schiene einer Schienenführung liegen die Zentren der Krümmungsradien der Kanten auf der Mittelpunktlinie. Sie haben dort denselben Abstand voneinander wie sie in der Schiene selbst in y-Richtung beabstandet sind. Die Krümmungsradien unterschiedlicher Teilbereiche der Schienen sind unterschiedlich. Sie verlaufen konzentrisch zueinander.

Weitere Vorteile und Merkmale der Erfindung ergeben sich aus den übrigen Ansprüchen sowie der folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:
- Fig. 1:: eine prinzipielle Seitenansicht auf einen Kraftfahrzeugsitz mit einer gekrümmten Schienenführung,
- Fig. 2:: eine perspektivische Darstellung in Form eines Montagebildes einer Schienenführung mit zusätzlichem Spindelantrieb,
- Fig. 3:: einen Axialschnitt durch eine Spindel eines Spindelantriebs mit Spindelmutter, Gehäuse und Zubehör, gezeigt ist nur der Bereich um die Spindelmutter herum,
- Fig. 4:: eine Draufsicht auf einen Zuschnitt für eine Schiene und
- Fig. 5:: eine prinzipielle Darstellung einer Prägeform mit Draufsicht auf den Formhohlraum.

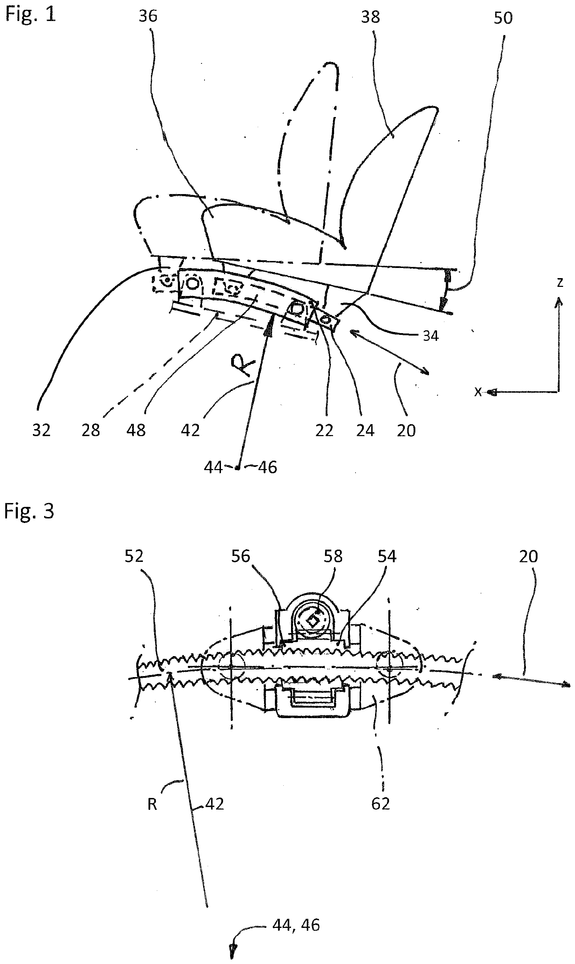

Der in Figur 1 dargestellte Kraftfahrzeugsitz ist in zwei unterschiedlichen Extrempositionen dargestellt, nämlich in ausgezogenen Strichen in einer hintersten Position und strichpunktiert in einer vordersten Position. Beide Positionen werden entlang eines Verschiebeweges 20 erreicht, der auf einem Kreisbogen verläuft.

In bekannter Weise hat der Kraftfahrzeugsitz mindestens ein Schienenpaar, das eine Bodenschiene 22, eine Sitzschiene 24 und Führungsmittel 26 aufweist. Im gezeigten Ausführungsbeispiel sind zwei parallel zueinander angeordnete Schienenführungen vorgesehen. Sie sind im Ausführungsbeispiel baugleich. Die Führungsmittel 26 sind als Kugeln ausgebildet, andere Ausbildungen sind möglich. Die Bodenschiene 22 ist im Wesentlichen C-förmig. Sie ist als umgreifende Schiene ausgebildet. Sie hat Mittel für eine Befestigung an einer Bodengruppe 28 eines sonst nicht näher dargestellten Kraftfahrzeugs. Die Sitzschiene 24 ist eine umgriffene Schiene, auch sie ist im Wesentlichen C-förmig. Sie hat Mittel 30, die hier als Öffnungen ausgebildet sind, sie dienen der Verbindung mit einem vorderen Verbindungsteil 32 und einem hinteren Verbindungsteil 34 für jede Sitzseite. Diese Verbindungsteile 32, 34 tragen einen Sitzbereich 36. Dieser ist starr mit der Sitzschiene 24 verbunden. Es ist eine Lehne 38 vorgesehen. Wie Figur 1 zeigt, sind keine Mittel für eine Sitzneigungsverstellung, Sitzhöhenverstellung und Neigungsverstellung der Lehne 38 vorgesehen.

Für die Beschreibung wird ein rechtshändiges x-y-z-Koordinatensystem verwendet. Die x-Achse und die y-Achse liegen in der Horizontalen. Die x-Achse zeigt in die Richtung normaler Geradeausfahrt des Kraftfahrzeugs. Die z-Achse ist parallel zu einer Vertikalen.

Die beiden Schienen 22, 24 jeder Schienenführung begrenzen einen kanalförmigen Hohlraum 40. Er ist nur in x-Richtung offen.

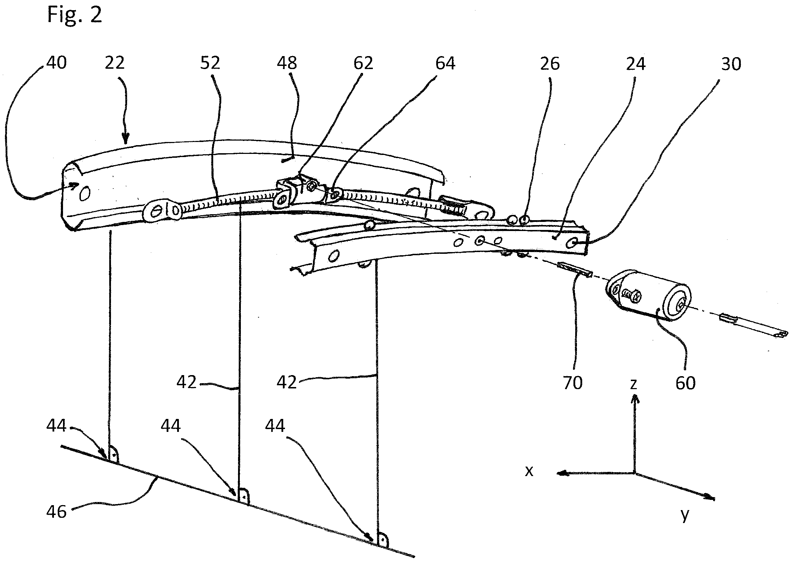

Die Bodenschiene 22 und die Sitzschiene 24 sind um den jeweils gleichen, kreisförmigen Krümmungsradius gekrümmt. Der Verschiebeweg 20 hat mindestens eine Länge von 150 mm und maximal eine Länge von 350 mm. Vorzugsweise liegt der Verschiebeweg 20 im Bereich von 250 bis 300 mm. De Krümmungsradius R 42 liegt zwischen 1.500 und 3.000 mm, insbesondere zwischen 1.800 und 2.500 mm. Ein Krümmungsmittelpunkt 44 liegt auf einer Mittelpunktlinie 46, die eine Parallele zur y-Achse ist. Die Krümmungsradien 42 für die einzelnen Kanten einer Schiene 22 bzw. 24 haben unterschiedliche Längen und auch unterschiedliche Krümmungsmittelpunkte. Alle Krümmungsmittelpunkte liegen auf einer Mittelpunktlinie 46. Die Radien verlaufen jeweils senkrecht zur Mittelpunktlinie 46, dies ist in Fig. 2 durch ein entsprechendes Symbol angegeben. Die Krümmungsmittelpunkte 44 zweier unterschiedlicher Längskanten einer Schiene 22 bzw. 24 haben in der Schiene selbst denselben Abstand in y-Richtung wie auf der Mittelpunktlinie 46.

Beide Schienen 22, 24 haben jeweils einen Basisflansch 48. Dieser Basisflansch verläuft in einer Ebene, die parallel zur x-z-Ebene ist. Der Basisflansch 48 hat die Form eines Kreisscheibensektors.

Die beiden Schienenpaare des Kraftfahrzeugsitzes sind lediglich in y-Richtung zueinander versetzt, in x-Richtung und in z-Richtung haben sie übereinstimmende Koordinaten. Der Versatz in y-Richtung entspricht mindestens der halben Breite des Sitzbereichs und ist maximal 120% der Breite in y-Richtung des Sitzbereichs.

Figur 1 zeigt den Zustand des im Kraftfahrzeug (nicht dargestellt) eingebauten Kraftfahrzeugsitzes. In diesem Einbauzustand ist das hintere Ende der Schienen 20, 22 der tiefste Punkt. Die Bezeichnung vorn entspricht der positiven Richtung der x-Richtung und oben entspricht der positiven Richtung der z-Achse.

Die Schienenführung ist im Kraftfahrzeug nach vorn ansteigend angeordnet. Eine Tangente angelegt an den vordersten Bereich der Bodenschiene 22 verläuft im Wesentlichen parallel zur x-y-Ebene. Die Tangente weicht von dieser Ebene vorzugsweise nur ±° 5, insbesondere nur ±° 3 ab.

In einer vordersten Stellung ist der Sitzbereich 36 um einen Winkel gegenüber der horizontalen x-y-Ebene nach hinten geneigt, der bei etwa 3° liegt. Der Winkelbereich kann 0 bis 6° betragen. Innerhalb des Verschiebeweges 20 wird eine Winkeländerung 50 um etwa 10° erreicht. Diese Winkeländerung kann zwischen 4 und 12° liegen.

Im Ausführungsbeispiel ist die Länge der vorderen Verbindungsteile 32 etwas geringer, beispielsweise 5 bis 30% geringer, als die Länge der hinteren Verbindungsteile 34. Die vorderen Verbindungsteile 32 jeder Sitzseite und ebenfalls die hinteren Verbindungsteile 34 jeder Sitzseite sind in Längsrichtung, die im Wesentlichen mit der z-Richtung übereinstimmt, gleich lang.

Die Mittelpunktlinie 46 ist der Ort der Krümmungsmittelpunkte 44. Diese befinden sich unterhalb der Schienenführung und damit auf der anderen Seite der Schienenführung als der Sitzbereich 36 und die Lehne 38.

Es ist eine motorische Verstellvorrichtung vorgesehen, die eine Verstellung des Kraftfahrzeugsitzes innerhalb des Verschiebeweges 20 ermöglicht. Sie hat in an sich bekannter Weise eine Spindel 52, die drehfest an ihren Enden über Halter mit der Bodenschiene 22 verbunden ist. Im Unterschied zum Stand der Technik ist die Spindel 52 entlang einer Kreislinie gekrümmt. Diese Kreislinie hat einen Krümmungsradius, der den Krümmungsradius der Schienen 22, 24 entspricht. Der Krümmungsmittelpunkt liegt auf der Mittelpunktlinie 46. Verwendet werden Spindeln 52 mit einem Durchmesser von 6 bis 10 mm, beispielsweise eine Spindel 52 mit M8-Gewinde. In an sich bekannter Weise wird die Spindel 52 von einer Spindelmutter 54 umgriffen. Diese Spindelmutter 54 ist gerade. Sie hat eine Länge von 10 bis 20 mm. Vorzugsweise wird sie kurz gewählt. Eine Länge von 10 bis 15 mm ist bevorzugt. Die Spindelmutter 54 ist eine Mutter nach dem Stand der Technik. Vorzugsweise hat die Spindelmutter 54 jedoch an jeder axialen Seite einen Anfangsbereich 56, der kegelförmig oder anderweitig nach außen erweiternd ausgebildet ist. Aufgrund der Anfangsbereiche 56 wird einem Verkanten der Spindelmutter 54 entgegengewirkt.

In an sich bekannter Weise ist an der Spindelmutter 54 ein äußeres Schneckenrad ausgebildet, das in Eingriff mit einer Schnecke 58 ist. Diese ist über eine elastische Ausgangswelle 70 mit einem Elektromotor 60 verbunden. Der Elektromotor 60 ist für beide Sitzseiten zuständig, er ist über eine weitere elastische Welle mit der Schienenführung der anderen Sitzseite verbunden. Dies ist Stand der Technik.

In einer bevorzugten Alternative wird anstelle eines Elektromotors 60 ein Handantrieb eingesetzt, hier findet beispielsweise eine Handkurbel Verwendung. Diese kann unterhalb der Sitzvorderkante angeordnet sein und eine im Wesentlichen in x-Richtung verlaufende Drehachse haben. Sie ist über elastische Wellen mit den beiden Sitzseiten verbunden.

Die Spindelmutter 54 und die Schnecke 58 sind in einem Gehäuse 62 untergebracht. Das Gehäuse 62 wird von einer Klammer 64 umgriffen, die im Wesentlichen U-förmig ist. Sie hat Befestigungsbereiche, diese sind mit der Sitzschiene 24 verbunden, hierzu hat die Sitzschiene 24 Befestigungslöcher. In der Mitte zwischen den beiden Befestigungslöchern befindet sich ein Durchlass der Sitzschiene 24 für die elastische Ausgangswelle 70.

Im Folgenden wird nun das Verfahren zur Herstellung der Sitzschiene 22, 24 beschrieben.

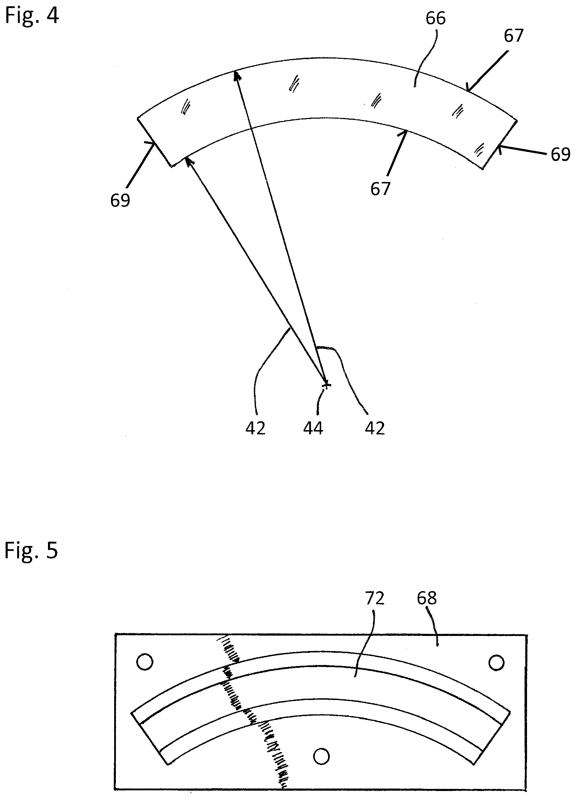

Figur 4 zeigt einen bananen- bzw. säbelförmigen Zuschnitt 66. Er ist aus einem Blechmaterial zugeschnitten. Verwendet werden Stahlblechqualitäten und - dicken wie im Stand der Technik. Im Unterschied zum Stand der Technik ist der Zuschnitt 66 durch Kreisbogenlinien begrenzt, die einem Krümmungsradius entsprechend der fertigen Schiene aufweisen. Seitlich sind die Zuschnitte durchLängskanten 67 in Form von radialen Linien begrenzt. Wie Figur 4 zeigt, liegen die Krümmungsmittelpunkte 44 auf einer in der Papierebene verlaufenden Linie, die der späteren Mittelpunktlinie 46 entspricht. Die Krümmungsmittelpunkte 44 verteilen sich über eine Länge, die der Dicke des Zuschnitts 66 entspricht. Der Radius der Längskanten 67 weicht vom Krümmungsradius um weniger als 3% ab. Der Zuschnitt hat kurze Querkanten 69. Diese können winklig zueinander, wie dargestellt, verlaufen, sie können auch parallel zueinander verlaufen (nicht dargestellt).

In Figur 5 ist ein Teil einer Prägeform 68 dargestellt, gezeigt ist nur eine prinzipielle Ansicht. Dieser Prägeform 68 ist eine entsprechende Gegenform zugeordnet, diese ist nicht dargestellt. Das Prägen des Zuschnitts 66 kann in einer einzigen Prägeform 68 erfolgen, es können aber auch mehrere Prägeschritte in unterschiedlichen Prägeformen 68 durchgeführt werden. Der Zuschnitt 66 wird in die Prägeform 68 eingelegt, es wird dann die Gegenform hinzugefügt und der Prägevorgang durchgeführt. Die Prägeform hat einen Hohlraum 72.

Eine Herstellung der Schiene 22, 24 durch schrittweises Formen entlang des Krümmungsverlaufs wird nicht bevorzugt, ein derartiges Verfahren wäre beispielsweise ein Rollen.

## Patentansprüche

1. Schienenführung einer Längsverstellung eines Kraftfahrzeugsitzes, mit einem Stellantrieb, der einen Drehantrieb, welcher insbesondere als Elektromotor (60) ausgebildet ist, eine Ausgangswelle (70), und ein Getriebe hat, das eine Spindelmutter (54), die mit der Ausgangswelle (70) drehverbunden ist und eine Spindel (52) aufweist, wobei die Spindel (52) ein Spindelgewinde aufweist, mit dem die Spindelmutter (54) in Eingriff ist, wobei die Spindel (52) in einem kreisförmigen Krümmungsradius (42) gekrümmt ist, der Krümmungsradius (42) zwischen 1.500 und 3.000 mm, insbesondere zwischen 1.800 und 2.500 mm liegt, und die Spindelmutter (54) eine gerade Mutter ist, und mit mindestens einem Schienenpaar, welches eine Bodenschiene (22), eine Sitzschiene (24) und zwischen diesen beiden Schienen (22, 24) angeordnete Führungsmittel (26) aufweist, wobei die Schienen (22, 24) des Schienenpaars in einer Längsrichtung, die im Wesentlichen parallel zu einer x-Achse ist, gegeneinander entlang eines Verschiebewegs (20) verschiebbar sind, die Sitzschiene (24) Mittel (30) zur Befestigung eines oberhalb des Schienenpaars anzuordnenden Sitzgestells aufweist, die Bodenschiene (22) und die Sitzschiene (24) um den jeweils gleichen, kreisförmigen Krümmungsradius (42) wie die Spindel (52) gekrümmt sind, der Krümmungsmittelpunkt (44) sich auf der dem Sitzgestell abgewandten Seite des Schienenpaars befindet, und die Spindel (52) mit einer Schiene, insbesondere mit der Bodenschiene (22), drehfest verbunden ist, und wobei die Bodenschiene (22) und die Sitzschiene (24) einen kanalförmigen Hohlraum (40) begrenzen, der nur in x-Richtung zugänglich ist, und sich die Spindel (52) in diesem Hohlraum (40) befindet.

2. Schienenführung nach Anspruch 1, **dadurch gekennzeichnet, dass** die Spindelmutter (54) eine axiale Länge unter 20 mm, insbesondere unter 15 mm aufweist.

3. Schienenführung nach einem der vorangegangenen Ansprüche, **dadurch gekennzeichnet, dass** der Krümmungsmittelpunkt (44) des Krümmungsradius (42) sich auf einer Ebene befindet, die parallel zur x-z-Ebene ist und durch die Längsmitte der Spindel (52) verläuft.

4. Schienenführung nach einem der vorangegangenen Ansprüche, **dadurch gekennzeichnet, dass** sie zwei Schienenpaare aufweist, dass die beiden Schienenpaare parallel zueinander angeordnet sind, dass die beiden Schienenpaare in y-Richtung in einem Abstand voneinander angeordnet sind und dass die beiden Schienenpaare im Wesentlichen baugleich sind, vorzugsweise dass sie baugleich sind.

5. Kraftfahrzeugsitz mit einer Schienenführung nach einem der vorangegangenen Ansprüche, **dadurch gekennzeichnet, dass** er ein Sitzgestell, einen Sitzbereich (36) und eine Lehne (38) hat, und dass das Sitzgestell mit den Mitteln (30) zur Befestigung verbunden ist.

6. Kraftfahrzeug mit einem Kraftfahrzeugsitz nach Anspruch 5, **dadurch gekennzeichnet, dass** der Kraftfahrzeugsitz keine Sitzneigungsverstellung, Sitzhöhenverstellung und Lehnenneigungsverstellung aufweist, wobei die Bodenschiene (22) mit einer Bodengruppe (28) des Kraftfahrzeugs verbunden ist, und dass auf ein in einer horizontalen Ebene befindliches Fahrzeug bezogen, die Lehne (38) in der hintersten Position der Längsverstellung in einem Winkel von 10 bis 20° gemessen von der Vertikalen nach hinten geneigt ist und in der vordersten Position der Sitzverstellung in einem Winkel von 5 bis 15° gemessen von der Vertikalen nach hinten geneigt ist, wobei die Winkeländerung (50) zwischen diesen beiden Positionen mindestens 3°, vorzugsweise etwa 6° beträgt.

## Claims

1. A rail guide of a longitudinal adjustment mechanism of a motor vehicle seat, with an actuating drive having a rotary drive unit configured in particular as an electric motor (60), an output shaft (70), and a gear unit comprising a spindle nut (54) rotationally connected to the output shaft (70) and a spindle (52), the spindle (52) comprising a spindle thread with which the spindle nut (54) is in engagement, wherein the spindle (52) is curved in a circular radius (42) of curvature, the radius (42) of curvature is between 1,500 and 3,000 mm, in particular between 1,800 and 2,500 mm, and that the spindle nut (54) is a straight nut, and with at least one pair of rails having a floor rail (22), a seat rail (24) and guiding means (26) disposed between these two rails (22, 24), wherein the rails (22, 24) of the pair of rails are displaceable relative to each other along a displacement path (20) in a longitudinal direction, which is substantially parallel to an x-axis, the seat rail (24) comprises means (30) for fastening a seat frame to be disposed above the pair of rails, the floor rail (22) and the seat rail (24) are each curved with the same circular radius (42) of curvature as the spindle (52), the center (44) of curvature is located on the side of the pair of rails facing away from the seat frame, and the spindle (52) is non-rotatably connected to a rail, in particular to the floor rail (22), and wherein the floor rail (22) and the seat rail (24) delimit a channel-shaped cavity (40) accessible only in the x-direction, and the spindle (52) is located in this cavity (40).

2. The actuating drive according to claim 1, **characterized in that** the spindle nut (54) has an axial length of less than 20 mm, in particular of less than 15 mm.

3. The actuating drive according to any one of the preceding claims, **characterized in that** the center (44) of curvature of the radius (42) of curvature is located on a plane that is parallel to the x-z-plane and extends through the longitudinal center of the spindle (52).

4. The rail guide according to any one of the preceding claims, **characterized in that** it comprises two pairs of rails, that the two pairs of rails are disposed parallel to each other, that the two pairs of rails are disposed at a distance from each other in the y-direction, and that the two pairs of rails are substantially constructionally identical, preferably, that they are constructionally identical.

5. A motor vehicle seat with a rail guide according to any one of the preceding claims, **characterized in that** it has a seat frame, a seat region (36) and a backrest (38), and that the seat frame is connected to the fastening means (30).

6. A motor vehicle with a motor vehicle seat according to claim 5, **characterized in that** the motor vehicle seat has no seat inclination adjustment mechanism, seat height adjustment mechanism and backrest inclination adjustment mechanism, wherein the floor rail (22) is connected to a floor assembly (28) of the motor vehicle, and that, in relation to a vehicle located in a horizontal plane, the backrest (38), in the rearmost position of the longitudinal adjustment mechanism, is inclined rearwards at an angle of 10° to 20° measured from the vertical, and, in the foremost position of the longitudinal adjustment mechanism, is inclined rearwards at an angle of 5° to 15° measured from the vertical, with the change (50) of angle between these two positions being at least 3°, preferably about 6°.

## Revendications

1. Guide à rails d'un dispositif de réglage longitudinal d'un siège de véhicule automobile, avec un mécanisme de commande qui comprend un dispositif d'entraînement en rotation lequel est conçu en particulier en tant que moteur électrique (60), un arbre de sortie (70) et un engrenage qui présente un écrou de broche (54) qui est relié en rotation à l'arbre de sortie (70) ainsi qu'une broche (52), ladite broche (52) comprenant un filetage de broche avec lequel ledit écrou de broche (54) est en prise, dans lequel la broche (52) est incurvée en un rayon de courbure circulaire (42), le rayon de courbure (42) est compris entre 1.500 et 3.000 mm, en particulier entre 1.800 et 2.500 mm, et ledit écrou de broche (54) est un écrou droit, et avec au moins une paire de rails qui présente un rail de fond (22), un rail de siège (24) et des moyens de guidage (26) agencés entre ces deux rails (22, 24), dans lequel les rails (22, 24) de la paire de rails sont déplaçables l'un par rapport à l'autre le long d'un trajet de déplacement (20) dans une direction longitudinale qui est pour l'essentiel parallèle à un axe x, le rail de siège (24) comprend des moyens (30) destinés à la fixation d'un châssis de siège à disposer au-dessus de la paire de rails, le rail de fond (22) et le rail de siège (24) sont incurvés respectivement du même rayon de courbure circulaire (42) que la broche (52), le centre de courbure (44) est situé du côté de la paire de rails lequel montre dans la direction opposée au châssis de siège, et la broche (52) est reliée d'une manière solidaire en rotation à un rail, en particulier au rail de fond (22), et dans lequel le rail de fond (22) et le rail de siège (24) délimitent une cavité en forme de canal (40) qui n'est accessible que dans la direction x, et la broche (52) se trouve dans cette cavité (40).

2. Guide à rails selon la revendication 1, **caractérisé par le fait que** l'écrou de broche (54) présente une longueur axiale inférieure à 20 mm, en particulier inférieure à 15 mm.

3. Guide à rails selon l'une quelconque des revendications précédentes, **caractérisé par le fait que** le centre de courbure (44) du rayon de courbure (42) est situé sur un plan qui est parallèle au plan x-z et s'étend à travers le centre longitudinal de la broche (52).

4. Guide à rails selon l'une quelconque des revendications précédentes, **caractérisé par le fait qu'**il comprend deux paires de rails, que les deux paires de rails sont disposées parallèlement l'une à l'autre, que les deux paires de rails sont disposées à une distance l'une de l'autre dans la direction y et que les deux paires de rails sont pour l'essentiel de construction identique, de préférence qu'elles sont de construction identique.

5. Siège de véhicule automobile comprenant un guide à rails selon l'une quelconque des revendications précédentes, **caractérisé par le fait qu'**il comprend un châssis de siège, une zone assise (36) et un dossier (38) et que ledit châssis de siège est relié aux moyens (30) de fixation.

6. Véhicule automobile comprenant un siège de véhicule automobile selon la revendication 5, **caractérisé par le fait que** le siège de véhicule automobile ne présente pas de réglage de l'inclinaison du siège, pas de réglage de la hauteur du siège et pas de réglage de l'inclinaison du dossier, dans lequel le rail de fond (22) est relié à un dessous de caisse (28) du véhicule automobile, et que, par rapport à un véhicule situé dans un plan horizontal, le dossier (38) est incliné vers l'arrière à un angle compris entre 10 et 20° dans la position la plus arrière du réglage longitudinal, mesuré à partir de la verticale, et est incliné vers l'arrière à un angle compris entre 5 et 15° dans la position la plus avant du réglage de siège, mesuré à partir de la verticale, le changement d'angle (50) entre ces deux positions étant de 3° au moins, de préférence de 6° à peu prés.
